# EUROPÄISCHE PATENTSCHRIFT

(11) **EP 2 673 138 B1**
(45) Veröffentlichungstag und Bekanntmachung des Hinweises auf die Patenterteilung: **04.03.2015**
(21) Anmeldenummer: 12703435.3
(22) Anmeldetag: 16.01.2012
(51) Int. Cl.: B32B 38/18, B32B 37/20, B32B 38/04

(54) **VERFAHREN UND VORRICHTUNG ZUM STANZ-LAMINIEREN EINER ERSTEN FOLIE AUF EINE FOLIENBAHN**
METHOD AND APPARATUS FOR STAMP-LAMINATING A FIRST FILM ONTO A FILM WEB
PROCÉDÉ ET APPAREIL DE LAMINAGE PAR ESTAMPAGE D'UN PREMIER FILM SUR UN FILM CONTINU

(30) Priorität: 10.02.2011 DE 102011010984
(43) Veröffentlichungstag der Anmeldung: 18.12.2013
(73) Patentinhaber: Heraeus Deutschland GmbH & Co. KG, 63450 Hanau (DE)
(72) Erfinder: GRESCH, Manfred, 61267 Neu-Anspach (DE); ROTH, Josef, 63856 Bessenbach (DE); WALTER, Siefried, 63571 Gelnhausen-Höchst (DE); BUSCHMANN, Gerd, 61130 Nidderau (DE); BECKER, Udo, 36396 Steinau (DE)
(74) Vertreter: Kühn, Hans-Christian
(86) Internationale Anmeldenummer: PCT/EP2012/000154
(87) Internationale Veröffentlichungsnummer: WO 2012/107157

(56) Entgegenhaltungen:
- EP-A1- 1 868 016
- EP-A1- 2 100 730
- US-A- 5 833 783

## Beschreibung

Die Erfindung betrifft ein Verfahren zur Herstellung eines Laminats aus wenigstens zwei Folien, wobei zumindest eine erste Folie strukturiert wird und anschließend mit zumindest einer zweiten Folie laminiert wird.

Die Erfindung betrifft auch eine Vorrichtung zum Herstellen eines Laminats mit einem solchen Verfahren.

Laminate aus zwei Folien finden in der Industrie eine breite Anwendung. Dabei wird beispielsweise eine Metallfolie auf eine Kunststofffolie oder zwischen zwei Kunststofffolien laminiert. Die Folien werden dabei strukturiert, um das gewünschte Produkt zu erhalten. Aus der WO 92/15118 ist es bekannt, zwei Folienbahnen derart aufeinander zu bringen, dass Stanzmarkierungen der einen Folienbahn an der gleichen Stelle des Folienverbunds angeordnet sind, wie die Stanzmarkierungen der zweiten Folienbahn. Dazu wird die Lage der Stanzmarkierungen überwacht und ein eventueller Versatz zwischen den Stanzmarkierungen der beiden Folienbahnen wird nach einer Messung ausgeglichen. Zusätzlich kann die eine Folienbahn mit einer Zugspannung beaufschlagt werden, so dass die dadurch erzeugte Dehnung dieser Folienbahn zum Ausgleich des Versatzes beiträgt.

Ein derartiges Verfahren erfordert einen hohen apparativen Aufwand. Es ist zudem problematisch, zwei Folien unter derartigen Ausgangsbedingungen fest miteinander zu verbinden, da nach Wegfall der Zugkraft beziehungsweise nach Angleichen der Temperaturen der beiden Folienbahnen in diesem Folienverbund thermomechanische Spannungen zwischen den beiden Folienbahnen auftreten, die dazu führen können, dass sich der Folienverbund verformt und sich die beiden Folienbahnen voneinander lösen. beiden Folienbahnen zueinander durch Änderung der Vorschubgeschwindigkeit der Folienbahnen geregelt.

Aus der DE 44 42 920 A1 ist ein Verfahren zum laminieren von zumindest zwei Folien bekannt, bei dem eine erste Folie in Form von aufeinanderfolgenden, vereinzelten Folienbahnabschnitten und eine zweite Folie in Form einer Endlos-Folienbahn aneinander geführt werden, wobei die Folienbahnabschnitte hintereinander und voneinander getrennt an definierten Stellen der Endlos-Folienbahn angeordnet und mit ihr verklebt werden. Dadurch wird das Problem des sich vergrößernden Versatzes bei Verkleben von zwei Endlos-Folienbahnen beseitigt.

Nachteilig ist hieran, dass die einzelnen Folienbahnabschnitte einzeln zugeführt werden müssen, was einen hohen apparativen Aufwand erfordert und eine sehr präzise Ausführung des Verfahrens benötigt. Damit gehen hohe Kosten für die Apparatur einher und die einzelnen Prozessschritte können dadurch langsamer werden.

Weitere Verfahren sind aus den US 5,833,783, EP 1 868 016 A1 und DE 44 11 618 A1 bekannt.

Die Aufgabe der Erfindung besteht also darin, die Nachteile des Stands der Technik zu überwinden. Insbesondere soll eine möglichst einfache und kostengünstige Methode gefunden werden, das Laminat zu bilden. Gleichzeitig müssen die Strukturen der Laminate aber auch exakt aufeinander liegend angeordnet werden können. Aufgabe der Erfindung ist auch eine Vorrichtung, mit der ein solches Laminat erzeugbar ist, bereitzustellen sowie ein derart gefertigtes Laminat zu liefern.

Die Aufgabe der Erfindung wird dadurch gelöst, dass zumindest eine zweite Folie mit wenigstens einem Werkzeug in einem einzigen Arbeitsschritt gestanzt und gleichzeitig mit der strukturierten ersten Folie laminiert wird, wobei die Folien zumindest zeitweise zu dem wenigstens einen Werkzeug gefördert werden.

Das Stanzen und Laminieren in einem Arbeitsschritt bedeutet erfindungsgemäß, dass die Prozessschritte des Stanzens und Laminierens zumindest zeitweise gleichzeitig erfolgen. Es spielt dabei keine Rolle, ob sich das auszustanzende Segment der zweiten Folien schon vor dem Andrücken des auszustanzenden Segments aus der zweiten Folie löst, oder ob die Folien zuerst in Verbindung zueinander gebracht werden und sich dadurch erreicht werden, dass dasselbe Werkzeug, das scharfe Kanten zum Ausstanzen einer der zweiten Folien hat, die zweite Folie auch flächig auf die erste Folie aufdrückt. Der Arbeitsschritt lässt sich also dadurch definieren, dass der Vorschub, beziehungsweise die Kraft sowohl zum Andrücken zumindest einer zweiten Folie als auch zum Ausstanzen zumindest einer zweiten Folie verwendet wird. Es kann besonders bevorzugt sogar vorgesehen sein, dass gleichzeitig die Wärme durch das Werkzeug bereitgestellt wird, um zumindest eine zweite Folie auf der ersten Folie zu befestigen.

Es kann erfindungsgemäß auch vorgesehen sein, dass die erste Folie durch Prägen und/oder Ausstanzen strukturiert wird.

Wenn die erste Folie vor dem Stanz-Laminieren mit der zweiten Folie oder den zweiten Folien geprägt und/oder gestanzt wird, muss das Werkzeug positioniert werden, damit die Stanzform der zweiten Folie oder der zweiten Folien zu den Prägungen und Stanzformen (Strukturen) der ersten Folie passt. Die Prägungen und Stanzformen können bei der Positionierung des Werkzeugs hilfreich sein. Zudem lassen sich Fehlprägungen und Fehlstanzungen der ersten Folie leichter erkennen, bevor die Folien laminiert werden.

Ferner ist erfindungsgemäß vorgesehen dass vor dem Stanz-Laminieren in die erste Folie Suchlöcher als Positionsmarkierungen gestanzt werden und dass das wenigstens eine Werkzeug mit zumindest einem Führungsstift in die Suchlöcher greift und dadurch zur ersten Folie positioniert wird, bevor die zumindest eine zweite Folie mit dem wenigstens einen Werkzeug gestanzt und mit der strukturierten ersten Folie laminiert wird.

Durch diese Maßnahmen wird eine exakte Ausrichtung der Folienstrukturen zueinander sichergestellt.

Auch kann vorgesehen sein, dass die ebene zweite Folie oder die ebenen zweiten Folien vor dem Stanz-Laminieren nicht strukturiert wird oder werden.

Wenn alle Strukturen durch die Stanz-Laminierung erzeugt werden, werden Arbeitsschritte gespart und damit das Herstellungsverfahren sicherer und kostengünstiger gestaltet.

Besonders vorteilhafte Ausgestaltungen des Verfahrens ergeben sich, wenn vorgesehen ist, dass die erste Folie und zumindest eine zweite Folie bereichsweise parallel zueinander ausgerichtet werden, vorzugsweise über wenigstens jeweils zwei Walzen gefördert werden, wobei die Folien in dem parallel zueinander ausgerichteten Bereich stanz-laminiert werden und wobei die Folien bevorzugt mit einem Abstand von 1 mm bis 30 mm, besonders bevorzugt mit einem Abstand von 5 mm bis 15 mm, ganz besonders bevorzugt mit einem Abstand von 10 mm parallel zueinander ausgerichtet werden, wobei die parallele Ausrichtung auf die Oberfläche der Folien an sich, nicht aber notwendigerweise auch auf die Zuführrichtung bezogen ist.

Diese parallele Ausrichtung bietet den Vorteil, dass die Stanz-Laminierung einfach und präzise erfolgen kann. Durch den dadurch möglichen einfachen Aufbau des Werkzeugs, lassen sich Kosten verringern.

Gemäß einer weiteren Ausgestaltung der Erfindung kann vorgesehen sein, dass zumindest zwei zweite Folien auf die erste Folie stanz-laminiert werden, wobei die Stanz-Laminierung der zweiten Folien nacheinander und/oder paarweise beidseitig erfolgt.

Mit diesem Verfahren kann eine Sandwichstruktur aufgebaut werden, mit dem die innere erste Folie des erzeugten Laminats gut geschützt ist.

Gemäße einer besonders vorteilhaften Ausgestaltung der Erfindung kann vorgesehen sein, dass als erste und zweite Folien zumindest eine endlose Folie verwendet wird, vorzugsweise alle Folien als endlose Folien verarbeitet werden.

Dies bietet den Vorteil, dass ein kontinuierliches Prozessieren des Verfahrens möglich wird, die sich bei einem erfindungsgemäßen Verfahren besonders effizient umsetzen lässt.

Erfindungsgemäß wird vorliegend unter einer endlosen Folie selbstverständlich keine unendlich lange Folie verstanden, sondern eine Folie deren Länge sehr groß im Vergleich zu ihrer Breite ist. Man könnte also statt den Begriff "endlose Folie" zu wählen, erfindungsgemäß auch immer von einer "kontinuierlichen Folie" sprechen. Die Folien sind dazu meist auf drehbaren Rollen aufgewickelt und werden während des Verfahrens abgewickelt. Die Folienbahnen können erfindungsgemäß eine Länge von 1 bis ankommen, dass die aufgewickelten Rollen der Folien noch in die Vorrichtung einsetzbar sind. Alternativ wäre es auch möglich, dass das Verfahren dem Herstellungsprozess für die Folien in der gleichen Fabrik nachgelagert ist.

Es kann auch vorgesehen sein, dass die Folien beim Stanz-Laminieren in einem ersten Schritt an einem Teil ihrer Berührurlgsflächen aneinandergeheftet und in einem zweiten Schritt ganzflächig miteinander verklebt werden.

Der zweite Schritt erfolgt dann nicht mehr ganz Zeitgleich zum ersten Schritt beim Stanz-Laminieren. Die beiden Schritte überlappen bei einem erfindungsgemäßen Verfahren aber üblicherweise.

Es kann ferner vorgesehen sein, dass die Folien thermisch miteinander verklebt werden.

Das thermische Verkleben der Folien ist ein Mittel, das sich gut mit dem Stanz-Laminieren kombinieren lässt. Dazu wird das Werkzeug entweder auf der Seite, auf der zumindest eine der zweiten Folien ausstanzt wird, geheizt oder das Gegenstück, das heißt die Auflage, auf der beispielsweise die erste Folie aufliegt, wird geheizt.

Eine weitere besonders bevorzugte Ausführungsform der Erfindung kann vorsehen, dass als erste Folie eine Metallfolie verwendet wird und/oder als zweite Folie oder als die zweite Folie eine Kunststofffolie verwendet wird oder mehrere Kunststofffolien als zweite Folien verwendet werden.

Bei Metall-Kunststoff-Laminaten lässt sich das erfindungsgemäße Verfahren besonders schnell und unkompliziert einsetzen. Diese Materialien sind auch für die Massenfertigung von Laminaten gut geeignet.

Die Aufgabe der Erfindung wird ferner gelöst durch eine Vorrichtung zum Herstellen eine Laminats mit einem solchen Verfahren, bei der vorgesehen ist, dass die Vorrichtung zum Fördern und Laminieren einer ersten Folie und zumindest einer zweiten Folie wobei die Vorrichtung zumindest ein Werkzeug umfasst, mit dem zumindest eine zweite Folie auf die erste Folie stanz-laminierbar ist. Dabei bezieht sich die parallele Ausrichtung auf die Oberfläche der Folien an sich, nicht aber notwendigerweise auch auf die Zuführrichtung.

Diese Vorrichtung ist gut zum Ausführen eines erfindungsgemäßen Verfahrens geeignet und gilt daher ebenso als erfindungsgemäß.

Dabei kann vorgesehen sein, dass eine Laminierfläche oder eine Auflage, die bevorzugt auf der einem Stanzwerkzeug des Werkzeugs gegenüberliegenden Seite der Folien angeordnet ist, heizbar ist, vorzugsweise das Werkzeug eine Heizung zum Heizen der Laminierfläche, insbesondere eine elektrische Heizung umfasst.

Es ist vorgesehen dass das Werkzeug wenigstens einen Führunasstift zum Positionieren des Werkzeugs in Suchlöchern der ersten Folie umfasst.

Auch für die Vorrichtung ist es besonders vorteilhaft, wenn vorgesehen ist, dass die Folien endlose oder kontinuierliche Folien sind, beziehungsweise wenn die Vorrichtung dazu geeignet ist solche Folien zu fördern und zu laminieren. Die Vorteile hierzu sind bei der Verwendung endloser Folien bei einem erfindungsgemäßen Verfahren diskutiert.

Eine besonders vorteilhafte Ausführungsform der Erfindung kann vorsehen, dass die erste Folie eine Metallfolie ist und die zweite Folie eine Kunststofffolie ist oder die zweiten Folien Kunststofffolien sind.

Ferner kann vorgesehen sein, dass das Werkzeug in dem Bereich angeordnet ist oder Werkzeuge in den Bereichen angeordnet sind, in dem oder denen die Folien parallel zueinander ausgerichtet sind.

Schließlich kann vorgesehen sein, dass das zumindest eine Werkzeug eine Stanzkante und eine Laminierfläche umfasst.

Der Erfindung liegt die überraschende Erkenntnis zugrunde, dass die Stanz-Laminierung in einem Schritt möglich ist. Dies bietet unter anderem den Vorteil, dass eine einfache Prozessführung ermöglicht wird. Die Vorrichtung, die zum Ausführen des Verfahrens benötigt wird, benötigt nur ein zentrales Stanz-Laminier-Werkzeug. Dadurch können die Folien auch unterschiedliche Förderrichtungen haben, da es erfindungsgemäß möglich wird, die gesamte Stanz-Laminierung nur an einem einzigen Punkt erfolgen zu lassen.

Besonders die Ausrichtung des Werkzeugs zur ersten Folie spielt dabei eine wichtige Rolle, wenn die erste Folie bereits Strukturiert ist. Dazu können Suchlöcher als Strukturierung in der ersten Folie vorgesehen sein, in die zumindest ein Führungsstift des Werkzeugs greift und damit die korrekte Positionierung des Werkzeugs zu den Strukturen der ersten Folie sicherstellt. Dies bewirkt, dass die durch das Werkzeug in der zumindest einen zweiten Folie erzeugten Strukturen genau an der richtigen Position relativ zu den Strukturen in der ersten Folie angeordnet sind.

Im Folgenden werden Ausführungsbeispiele der Erfindung anhand von vier schematisch dargestellten Figuren erläutert, ohne jedoch dabei die Erfindung zu beschränken. Dabei zeigt:
- Figur 1:: eine schematische Querschnittansicht einer ersten erfindungsgemäßen Vorrichtung für ein erfindungsgemäßes Verfahren;
- Figur 2:: eine schematische Ansicht eines Laminats, das mit einem erfindungsgemäßen Verfahren hergestellt wurde;
- Figur 3:: eine schematische perspektivische Ansicht einer zweiten erfindungsgemäßen Vorrichtung für ein erfindungsgemäßes Verfahren; und
- Figur 4:: eine schematische Querschnittansicht der zweiten erfindungsgemäßen Vorrichtung nach Figur 3.

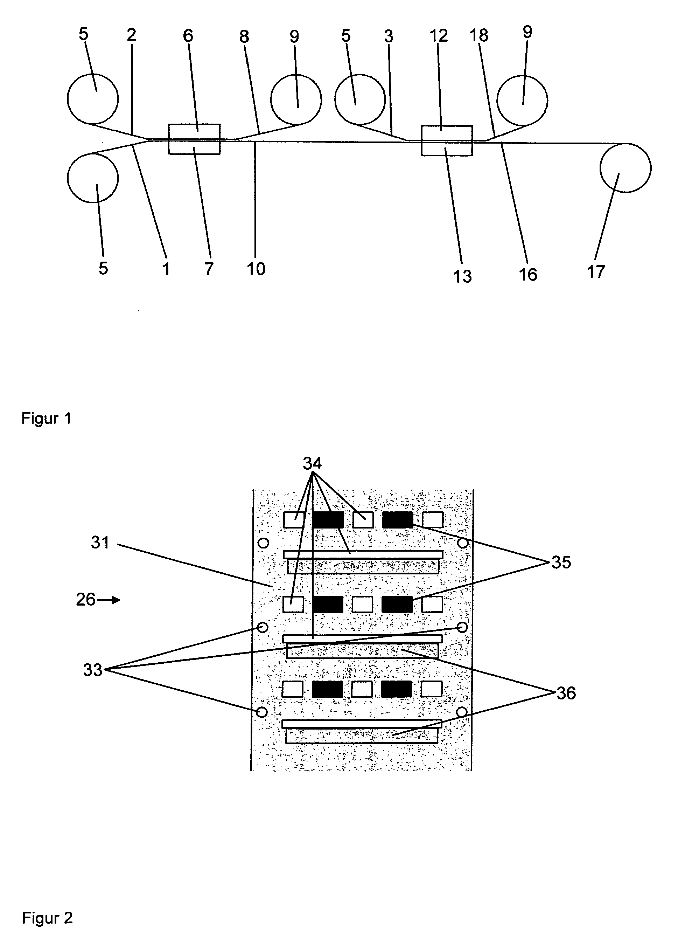

Figur 1 zeigt eine schematische Querschnittansicht einer ersten erfindungsgemäßen Vorrichtung zur Herstellung eines Laminats. Der Vorrichtung wird eine erste Folie 1, eine zweite Folie 2 und eine dritte Folie 3 zugeführt. Die Folien 1, 2, 3 sind auf Rollen 5 aufgewickelt und werden von den Rollen 5 abgespult und der Vorrichtung zugeführt.

Die erste Folie 1 ist bereits gestanzt auf der unteren Rolle 5 aufgewickelt. Die erste Folie 1 und die zweite Folie 2 werden abgewickelt und der Vorrichtung zugeführt. Dazu werden die Folien 1, 2 derart umgelenkt, dass sie in einem ersten Bereich mit einem Abstand von circa 5 mm parallel geführt werden. In diesem ersten Bereich ist ein erstes Werkzeug 6 der Vorrichtung angeordnet. Das Werkzeug 6 umfasst eine beheizbare Grundfläche 7, über die die erste Folie 1 läuft.

In dem Bereich des Werkzeugs 6 wird die zweite Folie 2 auf die erste Folie 1 aufgebracht und dabei ausgestanzt. Die ausgestanzten Segmente der zweiten Folie 2 liegen dann auf der ersten Folie 1 auf. Durch die erhöhte Temperatur der Grundfläche 7 wird das ausgetanzte Segment der zweiten Folie 2 mit der ersten Folie 1 fest verbunden beziehungsweise laminiert. Der Rest der zweiten Folie 2, aus der die Segmente ausgestanzt wurden, wird als erste Restfolie 8 auf einer Aufwickelrolle 9 aufgewickelt.

Die mit den Segmenten der zweiten Folie 2 laminierte Folie 10 wird zu einem zweiten Werkzeug 12 transportiert, das eine zweite Grundfläche 13 umfasst. Vor dem Eintritt in das zweite Werkzeug 12 wird auf die einmalig laminierte Folie 10 ein Klebstoff (nicht gezeigt) aufgetragen. Alternativ dazu kann auch die dritte Folie 3 mit einem Klebstoff beschichtet sein.

Mit dem zweiten Werkzeug 12 wird die dritte Folie 3 auf die erste Folie 1 beziehung-weise die einmalig laminierte Folie 10 stanz-laminiert. Dadurch entsteht ein Laminat 16, das auf eine Laminat-Rolle 17 aufgewickelt wird. Der Rest der dritten Folie 3 wird als Restfolie 18 auf eine Aufwickelrolle 9 aufgewickelt.

Figur 2 zeigt in einer schematischen Ansicht ein fertig aufgebautes Laminat 26, das aus einer ersten Folie 31, einer zweiten Folie und einer dritten Folie erzeugt wurde. Die erste Folie 31 ist ein gestanztes Metallband in dem verschiedene Ausnehmungen vorgesehen sind. Die Ausnehmungen haben eine periodische Anordnung.

An den Rändern des Metallbands 31 sind kreisrunde Suchlöcher 33 vorgesehen, die ausschließlich zur Positionsbestimmung eines Werkzeugs (nicht gezeigt) dienen, das zur Herstellung des Laminats 26 verwendet wird. Dazu greifen zwei Führungsstifte (nicht gezeigt) des Werkzeugs in die Suchlöcher 33.

Neben den Ausnehmungen, die als Suchlöcher 33 in dem gestanzten Metallband 31 angeordnet sind, gibt es Ausnehmungen 34, die unbedeckt sind, also als freie Ausnehmungen zurückbleiben, mit der zweiten Folie laminierte Ausnehmungen 35 und mit der dritten Folie laminierte Ausnehmungen 36.

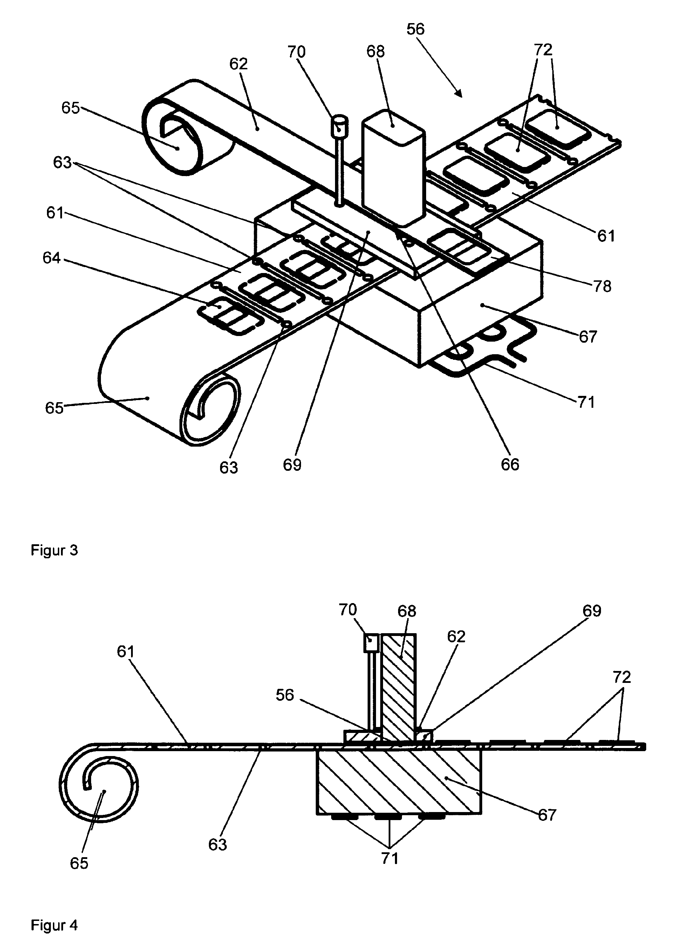

Die Figuren 3 und 4 zeigen schematische Darstellungen einer zweiten erfindungsgemäßen Vorrichtung zum Ausführen eines erfindungsgemäßen Verfahrens und zur Herstellung eines Laminats 56. Dabei zeigt Figur 3 eine schematische perspektivische Ansicht und Figur 4 eine schematische Querschnittansicht.

Ein Laminat 56 wird aus einem ersten gestanzten Metallband 61 und einer Kunststofffolie 62 aufgebaut. Das Metallband 61 hat Suchlöcher 63 und Prägungen 64 und/oder Ausnehmungen 64. Die beiden Folien 61, 62 werden von Rollen 65 abgespult und der Vorrichtung im rechten Winkel zueinander zugeführt. Die Vorrichtung umfasst ein Werkzeug 66, mit dem die Kunststofffolie 62 auf das gestanzte Metallband 61 laminiert wird.

Das Werkzeug 66 umfasst eine beheizte Auflage 67, die zum thermischen Laminieren der Kunststoffolie 62 auf dem Metallband 61 verwendet wird. Die Kunststoffolie 62 wird mit einem Stempel 68 und einer Matrize 69 des Werkzeugs 66 ausgestanzt und auf die obere Oberfläche des Metallbands 61 aufgepresst. Das Werkzeug 66 umfasst des Weiteren einen Führungsstift 70, der mit einer Ausnehmung in der Matrize 69 geführt wird.

Der Führungsstift 70 dient dazu, das Werkzeug 66 mit dem Stanzling aus der Kunststofffolie 62 richtig zum Metallband 61 zu positionieren. Dazu greift der Führungsstift 70 automatisch in die Suchlöcher 63 des Metallbands 61. Das Stanz-Laminieren mit der Vorrichtung erfolgt nur, wenn der Führungsstift 70 in oder durch eines der Suchlöcher 63 abgesenkt ist. Dazu sind in der Auflage 67 Löcher vorgesehen, so dass der Führungsstift 70 durch die Suchlöcher in die Löcher der Auflage 67 versenkbar ist. Nach dem Stanz-Laminieren wird der Führungsstift 70 wieder aus dem Suchloch 63 herausgezogen und die beiden Folien 61, 62 werden weitergefördert. In den Löchern oder dem Loch der Auflage 67 kann ein Sensor (nicht gezeigt) vorgesehen sein, mit dem Prüfbar ist, ob der Führungsstift 70 eingesteckt ist. Alternativ kann auch die Position des Führungsstifts 70 auch im Bereich der Matrize 69, beispielsweise induktiv gemessen werden.

Im Bereich des Werkzeugs 66 sind die Folien 61, 62 parallel zueinander angeordnet. Die Auflage 67 wird mit einer Heizung 71 geheizt. Die Heizung 71 kann eine Widerstandsheizung oder auch ein Wärmetauscher einer Gasheizung sein.

Die ausgetanzten Segmente 72 der Kunststofffolie 62 werden durch die Heizung 71 fest mit dem Metallband 61 verbunden und so das Laminat 56 hergestellt. Der Rest der Kunststofffolie 62 wird als Restfolie 78 aus der Vorrichtung gezogen.

Das Laminat 56 entsteht also in einem Arbeitsschritt durch Stanz-Laminieren der Kunststofffolie 62 auf das Metallband 61 im Inneren des Werkzeugs 66. Dies ist in Figur 4 angedeutet, wo die Bezugszeichenlinie zum Bezugszeichen 56 genau auf das gerade entstandene Laminat im Inneren der Werkzeugs 66 zeigt.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1, 31, 61: erste Folie / Metallband
- 2, 62: zweite Folie / Kunststofffolie
- 3: dritte Folie
- 5, 65: Rolle
- 6, 12, 66: Werkzeug
- 7,13: Grundfläche
- 8, 18, 78: Restfolie
- 9: Aufwickelrolle
- 10: einmalig laminierte Folie
- 16, 26, 56: Laminat
- 17: Laminatrolle
- 33, 63: Suchlöcher
- 34, 64: Ausnehmung / Prägung
- 35, 36: laminierte Ausnehmung
- 67: Auflage
- 68: Stempel
- 69: Matrize
- 70: Führungsstift
- 71: Heizung
- 72: Segment

## Patentansprüche

1. Verfahren zur Herstellung eines Laminats (10, 16, 26, 56) aus wenigstens zwei Folien (1, 2, 3, 31, 61, 62), wobei zumindest eine erste Folie (1, 31, 61) strukturiert wird und anschließend mit zumindest einer zweiten Folie (2, 3, 62) laminiert wird, wobei die zumindest eine zweite Folie (2, 3, 62) mit wenigstens einem Werkzeug (6, 12, 66) in einem einzigen Arbeitsschritt gestanzt und gleichzeitig mit der strukturierten ersten Folie (1, 31, 61) laminiert wird, wobei die Folien (1, 2, 3, 31, 61, 62) zumindest zeitweise zu dem wenigstens einen Werkzeug (6, 12, 66) gefördert werden, **dadurch gekennzeichnet, dass**
vor dem Stanz-Laminieren in die erste Folie (1, 31, 61) Suchlöcher (33, 63) als Positionsmarkierungen gestanzt werden und dass das wenigstens eine Werkzeug (6, 12, 66) mit zumindest einem Führungsstift (70) in die Suchlöcher (33, 63) greift und dadurch zur ersten Folie (1, 31, 61) positioniert wird, bevor die zumindest eine zweite Folie (2, 3, 62) mit dem wenigstens einen Werkzeug (6, 12, 66) gestanzt und mit der strukturierten ersten Folie (1, 31, 61) laminiert wird.

2. Verfahren nach Anspruch 1, **dadurch gekennzeichnet, dass**
die erste Folie (1, 31, 61) durch Prägen und/oder Ausstanzen strukturiert wird.

3. Verfahren nach Anspruch 1 oder Anspruch 2, **dadurch gekennzeichnet, dass**
die ebene zweite Folie (2, 3, 62) oder die ebenen zweiten Folien (2, 3, 62) vor dem Stanz-Laminieren nicht strukturiert wird oder werden.

4. Verfahren nach einem der vorangehenden Ansprüche, **dadurch gekennzeichnet, dass**
die erste Folie (1, 31, 61) und zumindest eine zweite Folie (2, 3, 62) bereichsweise parallel zueinander ausgerichtet werden, vorzugsweise über wenigstens jeweils zwei Walzen gefördert werden, wobei die Folien (1, 2, 3, 31, 61, 62) in dem parallel zueinander ausgerichteten Bereich stanz-laminiert werden und wobei die Folien (1, 2, 3, 31, 61, 62) bevorzugt mit einem Abstand von 1 mm bis 30 mm, besonders bevorzugt mit einem Abstand von 5 mm bis 15 mm, ganz besonders bevorzugt mit einem Abstand von 10 mm parallel zueinander ausgerichtet werden.

5. Verfahren nach einem der vorangehenden Ansprüche, **dadurch gekennzeichnet, dass** zumindest zwei zweite Folien (2, 3, 62) auf die erste Folie (1, 31, 61) stanz-laminiert werden, wobei die Stanz-Laminierung der zweiten Folien (2, 3, 62) nacheinander und/oder paarweise beidseitig erfolgt.

6. Verfahren nach einem der vorangehenden Ansprüche, **dadurch gekennzeichnet, dass** als erste und zweite Folien (1, 2, 3, 31, 61, 62) zumindest eine endlose Folie (1, 2, 3, 31, 61, 62) verwendet wird, vorzugsweise alle Folien (1, 2, 3, 31, 61, 62) als endlose Folien (1, 2, 3, 31, 61, 62) verarbeitet werden.

7. Verfahren nach einem der vorangehenden Ansprüche, **dadurch gekennzeichnet, dass** die Folien (1, 2, 3, 31, 61, 62) thermisch miteinander verklebt werden.

8. Verfahren nach einem der vorangehenden Ansprüche, **dadurch gekennzeichnet, dass** als erste Folie (1, 31, 61) eine Metallfolie (31, 61) verwendet wird und/oder als zweite Folie (2, 3, 62) oder als die zweiten Folien (2, 3) eine Kunststofffolie (62) verwendet wird oder mehrere Kunststofffolien (62) verwendet werden.

9. Vorrichtung zum Herstellen eines Laminats (10, 16, 26, 56) mit einem Verfahren nach einem der Ansprüche 1 bis 8, wobei
die Vorrichtung zum Fördern und Laminieren einer ersten Folie (1, 31, 61) und zumindest einer zweiten Folie (2, 3, 62) geeignet ist, wobei die Folien (1, 2, 3, 31, 61, 62) bereichsweise parallel zueinander ausgerichtet sind und wobei die Vorrichtung zumindest ein Werkzeug (6, 12, 66) umfasst, mit dem zumindest eine zweite Folie (2, 3, 62) auf die erste Folie (1, 31, 61) stanz-laminierbar ist, **dadurch gekennzeichnet, dass**
das Werkzeug (6, 12, 66) wenigstens einen Führungsstift (70) zum Positionieren des Werkzeugs (6, 12, 66) in Suchlöchern (33, 63) der ersten Folie (1, 31, 61) umfasst.

10. Vorrichtung nach Anspruch 9, **dadurch gekennzeichnet, dass**
eine Laminierfläche (7, 13) und/oder eine Auflage (67), die bevorzugt auf der einem Stanzwerkzeug (68) des Werkzeugs (6, 12, 66) gegenüberliegenden Seite der Folien (1, 2, 3, 31, 61, 62) angeordnet ist, heizbar ist, vorzugsweise das Werkzeug (6, 12, 66) eine Heizung (71) zum Heizen der Laminierfläche (7, 13), insbesondere eine elektrische Heizung (71) umfasst.

11. Vorrichtung nach Anspruch 9 oder Anspruch 10, **dadurch gekennzeichnet, dass** die erste Folie (1, 31, 61) eine Metallfolie (31, 61) ist und die zweite Folie (2, 3, 62) eine Kunststoffolie (62) ist oder die zweiten Folien (2, 3) Kunststofffolien (62) sind.

12. Vorrichtung nach einem der Ansprüche 9 bis 11, **dadurch gekennzeichnet, dass** das Werkzeug (6, 12, 66) im Bereich angeordnet ist oder Werkzeuge (6, 12, 66) in den Bereichen angeordnet sind, in dem oder denen die Folien (1, 2, 3, 31, 61, 62) parallel zueinander ausgerichtet sind, und/oder das zumindest eine Werkzeug (6, 12, 66) eine Stanzkante und eine Laminierfläche (7, 13) umfasst.

## Claims

1. Method for producing a laminate (10, 16, 26, 56) from at least two films/foils (1, 2, 3, 31, 61, 62), whereby at least one first film/foil (1, 31, 61) is being structured and then laminated to at least one second film/foil (2, 3, 62), whereby the at least one second film/foil (2, 3, 62) is being punched by at least one tool (6, 12, 66) and simultaneously being laminated to the structured first film/foil (1, 31, 61) in a single working step, whereby the films/foils (1, 2, 3, 31, 61, 62) are conveyed, at last part of the time, to the at least one tool (6, 12, 66), **characterised in that**, prior to the punch-lamination, positioning holes (33, 63) are punched into the first film/foil (1, 31, 61) as position markers and **in that** the at least one tool (6, 12, 66) engages the positioning holes (33, 63) by means of at least one guide pin (70) and thus is being positioned with respect to the first film/foil (1, 31, 61) before the at least one second film/foil (2, 3, 62) is punched and laminated to the structured first film/foil (1, 31, 61) by the at least one tool (6, 12, 66).

2. Method according to claim 1, **characterised in that** the first film/foil (1, 31, 61) is being structured by means of embossing it and/or by punching it out.

3. Method according to claim 1 or claim 2, **characterised in that** the planar second film/foil (2, 3, 62) or the planar second films/foils (2, 3, 62) is or are not being structured prior to the punch-lamination.

4. Method according to any one of the preceding claims, **characterised in that** the first film/foil (1, 31, 61) and at least one second film/foil (2, 3, 62) are being aligned such as to be parallel to each other over regions thereof, preferably are conveyed over at least two rollers each, whereby the films/foils (1, 2, 3, 31, 61, 62) are being punch-laminated in said region of mutually parallel alignment, and whereby the films/foils (1, 2, 3, 31, 61, 62) are preferably being aligned such as to be parallel to each other at a distance of 1 mm to 30 mm, particularly preferably at a distance of 5 mm to 15 mm, more particularly preferably at a distance of 10 mm.

5. Method according to any one of the preceding claims, **characterised in that** at least two second films/foils (2, 3, 62) are being punch-laminated onto the first film/foil (1, 31, 61), whereby the punch-lamination of the second films/foils (2, 3, 62) takes place consecutively and/or in pairs bilaterally.

6. Method according to any one of the preceding claims, **characterised in that** at least one continuous film/foil (1, 2, 3, 31, 61, 62) is used as first and second films/foils (1, 2, 3, 31, 61, 62), preferably all films/foils (1, 2, 3, 31, 61, 62) are processed as continuous films/foils (1, 2, 3, 31, 61, 62).

7. Method according to any one of the preceding claims, **characterised in that** the films/foils (1, 2, 3, 31, 61, 62) are being glued to each other by thermal means.

8. Method according to any one of the preceding claims, **characterised in that** a metal foil (31, 61) is used as first film/foil (1, 31, 61) and/or **in that** a plastic film/foil (62) is used as second film/foil (2, 3, 62) or multiple plastic films (62) are used as the second films/foils (2, 3).

9. Device for producing a laminate (10, 16, 26, 56) by means of a method according to any one of the claims 1 to 8, whereby the device is well-suited for conveying and laminating a first film/foil (1, 31, 61) and at least one second film/foil (2, 3, 62), whereby the films/foils (1, 2, 3, 31, 61, 62) are aligned such as to be parallel to each other at least over regions thereof, and whereby the device comprises at least one tool (6, 12, 66) by means of which at least one second film/foil (2, 3, 62) can be punch-laminated onto the first film/foil (1,31, 61), **characterised in that** the tool (6, 12, 66) comprises at least one guide pin (70) for positioning the tool (6, 12, 66) in positioning holes (33, 63) of the first film/foil (1, 31, 61).

10. Device according to claim 9, **characterised in that** a lamination surface (7, 13) and/or a support (67), which preferably is arranged on the side of the films/foils (1, 2, 3, 31, 61, 62) opposite from a punching tool (68) of the tool (6, 12, 66) can be heated, [whereby] the tool (6, 12, 66) preferably comprises a heating system (71) for heating the lamination surface (7, 13), in particular an electrical heating system (71).

11. Device according to claim 9 or claim 10, **characterised in that** the first film/foil (1, 31, 61) is a metal foil (31, 61) and the second film/foil (2, 3, 62) is a plastic film (62) or the second films/foils (2, 3) are plastic films (62).

12. Device according to any one of the claims 9 to 11, **characterised in that** the tool (6, 12, 66) is arranged in the region or the tools (6, 12, 66) are arranged in the regions, in which the films/foils (1, 2, 3, 31, 61, 62) are aligned such as to be parallel to each other, and/or **in that** the at least one tool (6, 12, 66) comprises a punching edge and a lamination surface (7, 13).

## Revendications

1. Procédé de fabrication d'un laminé (10, 16, 26, 56) à partir d'au moins deux films (1, 2, 3, 31, 61, 62), pour lequel au moins un premier film (1, 31, 61) est structuré et est ensuite laminé avec au moins un second film (2, 3, 62), pour lequel au moins un second film (2, 3, 62) est découpé avec au moins un outil (6, 12, 66) en une seule étape et laminé simultanément avec le premier film (1, 31, 61) structuré, pour lequel les films (1, 2, 3, 31, 61, 62) sont acheminés au moins par moments vers le au moins un outil (6, 12, 66), **caractérisé en ce que**, avant le laminage à découpage dans le premier film (1, 31, 61), des trous de positionnement (33, 63) sont découpés comme marques de positionnement et que le au moins un outil (6, 12, 66) se met en prise dans les trous de positionnement (33, 63) avec au moins une tige de guidage (70) et est positionné par ce moyen par rapport au premier film (1, 31, 61), avant que le au moins un second film (2, 3, 62) soit découpé avec le au moins un outil (6, 12, 66) et soit laminé avec le premier film (1, 31, 61) structuré.

2. Procédé selon la revendication 1, **caractérisé en ce que** le premier film (1, 31, 61) est structuré par gaufrage et / ou estampage.

3. Procédé selon la revendication 1 ou 2, **caractérisé en ce que** le second film plan (2, 3, 62) n'est pas structuré ou les seconds films plans (2, 3, 62) ne sont pas structurés avant le laminage à découpage.

4. Procédé selon l'une des revendications précédentes, **caractérisé en ce que** le premier film (1, 31, 61) et au moins un second film (2, 3, 62) sont orientés par zones parallèlement l'un par rapport à l'autre, sont acheminés de préférence par l'intermédiaire d'au moins respectivement deux rouleaux, pour lequel les films (1, 2, 3, 31, 61, 62) sont laminés par découpage dans la zone où ils sont orientés parallèlement l'un par rapport à l'autre et pour lequel les films (1, 2, 3, 31, 61, 62) sont orientés parallèlement l'un par rapport à l'autre de préférence avec un intervalle d'1 mm à 30 mm, de manière particulièrement préférée avec un intervalle de 5 mm à 15 mm, de manière tout à fait particulièrement préférée avec un intervalle de 10 mm.

5. Procédé selon l'une des revendications précédentes, **caractérisé en ce qu'**au moins deux seconds films (2, 3, 62) sont laminés par découpage sur le premier film (1, 31, 61), pour lequel le laminage par découpage des seconds films (2, 3, 62) est exécuté des deux côtés l'un après l'autre et / ou par paires.

6. Procédé selon l'une des revendications précédentes, **caractérisé en ce que**, comme premiers et seconds films (1, 2, 3, 31, 61, 62), au moins un film sans fin (1, 2, 3, 31, 61, 62) est utilisé, que, de préférence, tous les films (1, 2, 3, 31, 61, 62) sont traités comme des films sans fin (1, 2, 3, 31, 61, 62).

7. Procédé selon l'une des revendications précédentes, **caractérisé en ce que** les films (1, 2, 3, 31, 61, 62) sont collés ensemble thermiquement.

8. Procédé selon l'une des revendications précédentes, **caractérisé en ce qu'**une feuille de métal (31, 61) est utilisée comme premier film (1, 31, 61) et /ou comme deuxième feuille (2, 3, 62) ou qu'un film plastique (62) est utilisé ou que plusieurs films plastiques (62) sont utilisés comme seconds films (2, 3).

9. Appareil destiné à la fabrication d'un laminé (10, 16, 26, 56) avec un procédé selon l'une des revendications 1 à 8, pour lequel l'appareil convient pour l'acheminement et le laminage d'un premier film (1, 31, 61) et au moins d'un second film (2, 3, 62), pour lequel les films (1, 2, 3, 31, 61, 62) sont orientés par zones parallèlement les uns par rapport aux autres et pour lequel l'appareil comprend au moins un outil (6, 12, 66), avec lequel au moins un second film (2, 3, 62) peut être laminé par découpage sur le premier film (1, 31, 61), **caractérisé en ce que** l'outil (6, 12, 66) comprend au moins une tige de guidage (70) pour le positionnement de l'outil (6, 12, 66) dans des trous de positionnement (33, 63) du premier film (1, 31, 61).

10. Appareil selon la revendication 9, **caractérisé en ce qu'**une surface de laminage (7, 13) et / ou une embase (67), qui est agencée de préférence sur la face des films (1, 2, 3, 31, 61, 62) opposée à un outil de découpage (68) de l'outil (6, 12, 66), peut être chauffée, que l'outil (6, 12, 66) comprend de préférence un chauffage (71) pour le chauffage de la surface laminée (7, 13), en particulier un chauffage électrique (71).

11. Appareil selon la revendication 9 ou la revendication 10, **caractérisé en ce que** le premier film (1, 31, 61) est une feuille de métal (31, 61) et que le second film (2, 3, 62) est un film plastique (62) ou que les seconds films (2, 3) sont des films plastiques (62).

12. Appareil selon l'une des revendications 9 à 11, **caractérisé en ce que** l'outil (6, 12, 66) est agencé dans la zone ou que des outils (6, 12, 66) sont agencés dans les zones, dans laquelle ou dans lesquelles les films (1, 2, 3, 31, 61, 62) sont orientés parallèlement les uns par rapport aux autres et / ou le au moins un outil (6, 12, 66) comprend une arête de découpage et une surface de laminage (7, 13).
